# EUROPEAN PATENT SPECIFICATION

(11) **EP 3 400 828 B1**
(45) Date of publication and mention of the grant of the patent: **28.07.2021**
(21) Application number: 18171537.6
(22) Date of filing: 09.05.2018
(51) Int. Cl.: A45F 5/10, A45F 3/14, B65G 7/12

(54) **A HANDLING STRAP FOR ATTACHING A HANDLE TO A VERTICAL FACE OF A HEAVY ARTICLE**
HANDHABUNGSBAND ZUR BEFESTIGUNG EINES GRIFFS AN EINER VERTIKALEN FLÄCHE EINES SCHWEREN ARTIKELS
SANGLE DE MANIPULATION PERMETTANT DE FIXER UN MANCHE SUR UNE FACE VERTICALE D'UN OBJET LOURD

(30) Priority: 11.05.2017 DK PA201770333
(43) Date of publication of application: 14.11.2018
(73) Proprietor: VKR Holding A/S, 2970 Hørsholm (DK)
(72) Inventor: Kaper, Günther, 2970 Hørsholm (DK)
(74) Representative: AWA Denmark A/S

(56) References cited:
- WO-A1-2017/033151
- FR-A1- 2 920 418
- US-A- 4 431 226
- US-B1- 7 390 042
- US-B1- 8 251 421

## Description

The present invention relates to a handling strap for attaching a handle a heavy article.

A handling strap of this kind is disclosed in WO 2017/033151 A1, which relates to a Board Carrier for carrying a surfboard, paddle board, etc., and discloses a device comprising a carrier body with a central section, a first flap, and a second flap. The first flap and the second flap are extending generally parallel from either side of the central section. The central section comprises a handle with a padded section. A retention strap is attached to the first flap and is threaded through a longitudinal hole, a strap fastener, on the second flap to be connected thereto by means of a hook and loop fastener provided on the retention strap itself. A strap grip (friction padding) is applied to the retention strap, apparently throughout the length thereof.

Further, a large variety of handling straps are known for different applications.

FR 2 920 418 A1, discloses a handling strap comprising a strap, a buckle, handles, and padding. All handles and paddings are slidable relative to the strap.

US 2011/0297710 A1 discloses a crib mattress caddy for catching and lifting a crib mattress. The crib mattress caddy comprises two parallel straps, which may each comprise two strap parts or a unitary strap, front and back mounting brackets, buckles allowing adjustment of the strap length, a tilting strap and a lifting strap attached to the two parallel straps. In use the mattress is tilted to a vertical position using the tilting strap whereby the lifting strap is positioned at a vertical face to be caught for lifting the mattress. The mounting brackets are L-shaped and may include non-slip coatings. The tilting strap and the lifting strap provide soft, flexible handles.

US 2009/0057358 A1 discloses a number of different embodiments of a strap system for attaching a handle to an awkward handle-less item, comprising one or more straps for attaching around the item, buckles for allowing adjustment of the length of the straps, and a at least semi-rigid handle slidably adjustable along a strap. The handle is placed on top of the item in use.

US 2013/0221047 A1 discloses a strap for securing an item to a structure such as bike saddle, a rucksack, etc. The strap is provided with a buckle allowing adjustment of the length of the strap and an attaching loop is attached to the strap. The attaching loop is intended for attaching the strap to the structure.

Articles such as prefabricated windows, e.g. roof windows for mounting in a sloping roof and possibly packaged in e.g. cardboard boxes, generally have a box shaped outline with a substantial length, a small thickness and a width in between, the article thus having two opposing wide longitudinal faces, two opposing narrow longitudinal faces, and two opposing end faces. Some of these articles are relatively small and easy to handle even for a single person, whereas others are large and demands two persons for carrying, e.g. at a site of installation. Even for two persons the load to be carried by each person may be substantial as such large window may weigh e.g. 150 kg, i.e. 75 kg per person. Such large window also has a substantial width making handling more difficult.

It is an object of the present invention to provide a means to facilitate handling of bulky, heavy and especially box-shaped articles.

This is obtained by means of a handling strap according to claim 1, comprising a circumferential strap with a buckle allowing an end of the circumferential strap to be threaded though the buckle and to be releasably locked to the buckle, said buckle thus allowing the circumferential strap to be releasably tightened around the article, a handle fixedly fastened to the circumferential strap, and a pad fixedly fastened to the circumferential strap in the vicinity of the handle, wherein the handle comprises a rigid gripping part. By placing the circumferential strap around the article at a longitudinal end thereof, the pad being positioned at a narrow longitudinal face, and tightening the circumferential strap around the article e.g. by pulling the circumferential strap through the buckle and locking the buckle on the circumferential strap, the handle is placed adjacent a wide longitudinal face near the narrow longitudinal face against which the pad is placed. When the article is raised to stand on said narrow longitudinal face, said face thereby providing a bottom face, the handle is placed at a vertical face, near the bottom of the article facilitating lifting and carrying the article by gripping the rigid gripping part of the handle. Friction, in part imparted by the pad, due to the tightness of the circumferential strap prevents the circumferential strap from sliding around the article and accordingly the handle stays in place. Preferably a handling strap is provided at each longitudinal end of the package for two persons to have a handle at either end of the package. Apart from adding to the friction the pad provides for protection of the article. The rigid gripping part of the window makes it possible for a person to grip and lift even a heavy article, thereby carrying a load of e.g. 75 kg, without having his or her hand damaged by squeezing, etc.

In an embodiment the buckle allows the circumferential strap to be releasably and adjustably tightened around the article. Thereby a given handling strap may be used for different articles with different circumferences.

By the "pad (being) fixedly fastened to the circumferential strap in the vicinity of the handle" (emphasis added) should herein be understood that the distance between the pad and the handle is less than preferably one quarter of the length of the circumferential strap.

By two items being "fixedly fastened" to each other should herein be understood that the items are, possibly releasably, locked to each other at least at a fixing point such that the two items may not slide relative to each other and may not be removed from the fixing point, but may possibly move within a limited distance around the fixing point.

In an embodiment the handling strap comprises only a single circumferential strap. This facilitates attaching and detaching the handling strap which is beneficial since the handling strap is attached to an article when the article is to be moved, etc. and afterwards the handling strap will usually and preferably be removed again for the article to be used for its intended purpose such as being mounted in a roof construction, when the article is a roof window.

In an embodiment the handle is attached to the circumferential strap through a handle strap. Hereby is obtained that the handle is positioned e.g. a small distance from the circumferential strap and thus from the face against which the circumferential strap is abutting, which facilitates handling in general. It is even foreseen that the length of the handle strap is adjustable thus providing for adjusting the position of the handle relative to the bottom face of the article.

In an embodiment the pad has a rigid part, which is bent. Hereby the rigid part of the pad may be bent at an angle in the range 75° to 135°, preferably 80° to 115°, more preferably approximately 90°. Hereby the rigid part of the pad may grip a corner of the package between the narrow longitudinal face against which the pad abuts and an adjacent wide longitudinal face thus enhancing the overall frictional grip of the handling strap around the packaging further ensuring that the circumferential strap does not slide around the article.

In an embodiment the bend is at an end of the pad opposite the handle.

In an embodiment the pad comprises a flexible part. This allows the pad to have a length exceeding the width of the narrow longitudinal face, the flexible part of the pad bending around a corner between the narrow longitudinal face and an adjacent wide longitudinal face, when mounting the handling strap on the article, the pad thus protecting said corner.

In an embodiment a second pad is preferably slidably attached to the circumferential strap. Hereby is provided for protecting the opposite narrow longitudinal face and by sliding the second pad along the circumferential strap the handling strap may be adjusted to fit a given article.

In case the handling strap is intended only for articles of a specific circumference the second pad may be fixedly fastened to the circumferential strap.

The second pad may be flexible for the same reason as the first pad may be flexible.

In an embodiment the buckle is attached to a first end of the circumferential strap, a second end of the circumferential strap is threaded through the buckle for tightening the circumferential strap around the article, and a free end of the second end is thickened to prevent removal of the second end from the buckle. Hereby general handling of the handling strap is facilitated since the second end of the circumferential strap is not unintentionally released from the buckle making rethreading necessary the next time the handling strap is to be used. Mounting the handling strap does not require the second end of the circumferential strap to be released from the buckle since the loop provided by the circumferential strap when the second end thereof is threaded through the buckle may simply be passed over the longitudinal end of the article.

In the following the invention will be explained in further detail by means of an example of an embodiment having reference to the accompanying drawings, in which
Fig. 1 is a top view of a handling strap according to the invention prior to finishing;
Fig. 2 is a side view of the handling strap of Fig. 1;
Fig. 3 is a side view of the handling strap of Fig. 1 indicating the finishing of the handling strap; and
Fig. 4 is a perspective view indicating the mounting of the handling strap on an article.

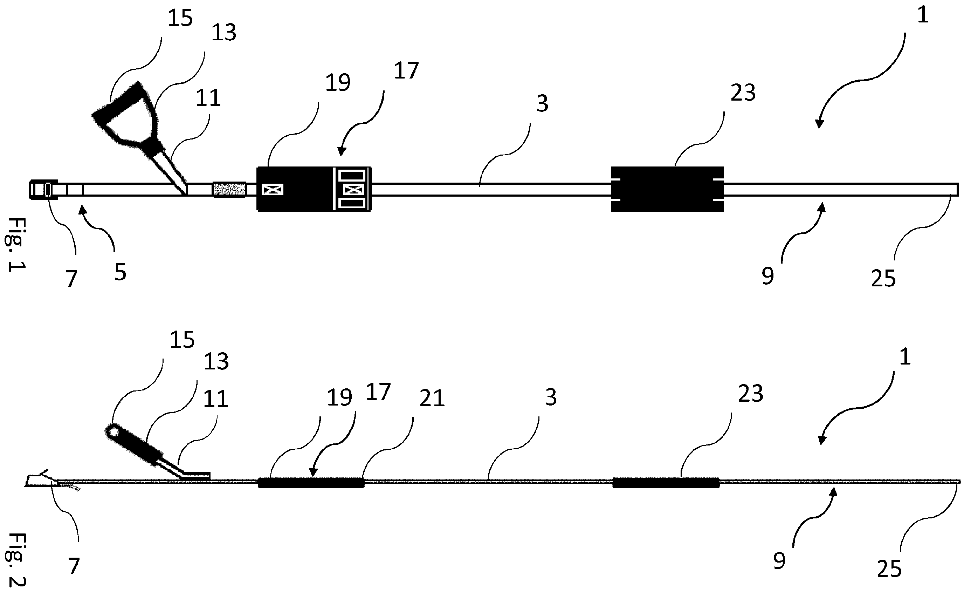

Figs. 1 and 2 show a handle strap 1 in an almost finished condition. The handle strap 1 comprises a circumferential strap 3 intended to be placed around an article to be carried, thus following the circumference of the article, in use. At a first end 5 of the circumferential strap 3 a buckle 7 is fixedly connected to the circumferential strap 3. In the embodiment shown the buckle 7 may be of any known art allowing a second end 9 of the circumferential strap 3 to be threaded though the buckle 7 and to be releasably locked to the buckle 7 to form the circumferential strap 3 into a loop with a fixed circumference, i.e. a circumference that will not expand unintentinally during use.

A handle strap 11 is attached to the circumferential strap 3 e.g. by stitching, and the handle strap 11 is attached to a rigid handle 13. The handle being rigid as a whole, it comprises a rigid gripping part 15. In the vicinity of the handle strap 11 a first pad 17 is fixedly attached to the circumferential strap 3. Being fixedly attached or fastened to the circumferential strap 3 the first pad 17 is not able to slide along the circumferential strap 3. The first pad 17 has a flexible part 19 and rigid part 21, which in the present embodiment is provided by an insert, e.g. one or more pieces of metal plate, embedded in the first pad 17. The insert should be rigid but yet ductile as it will be explained below.

In the embodiment shown, a second pad 23 is slidably attached to the circumferential strap 3 to be able to slide there along.

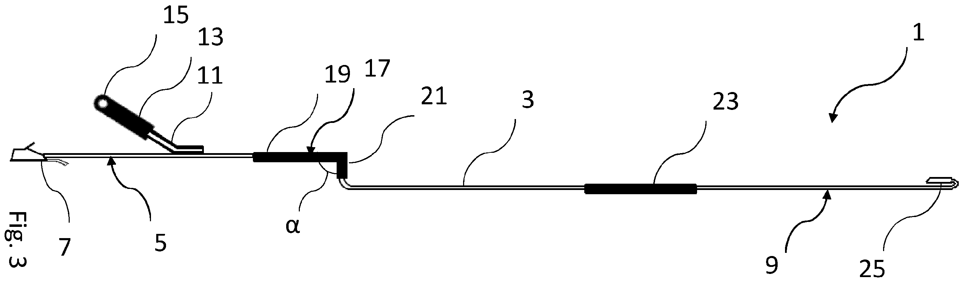

In Fig. 3 the handling strap 1 is shown with the rigid part 21 of the first pad 17 bend at an angle α, which in the embodiment shown is approximately 90°. Other angles may be used. Thus the insert in the rigid part 21 should be ductile to allow bending into the angle without breaking.

In the present embodiment the rigid part 21 is positioned in the distal end of the first pad 17 relative to the handle 13. The rigid part 21 i.e. the insert may have a length along the circumferential strap 3 about 10 cm and the bend may be placed at the middle of the insert.

In Fig. 3 a free end 25 of the second end 9 of the circumferential strap 3 is shown to be folded and stitched to provide a thickening of the free end 25. It should be understood that this folding and stitching should only be provided after the second end 9 has been threaded through the buckle 7, since the purpose of the folding and stitching is to prevent the second end 9 from being removed from the buckle 7 for reasons to be explained below.

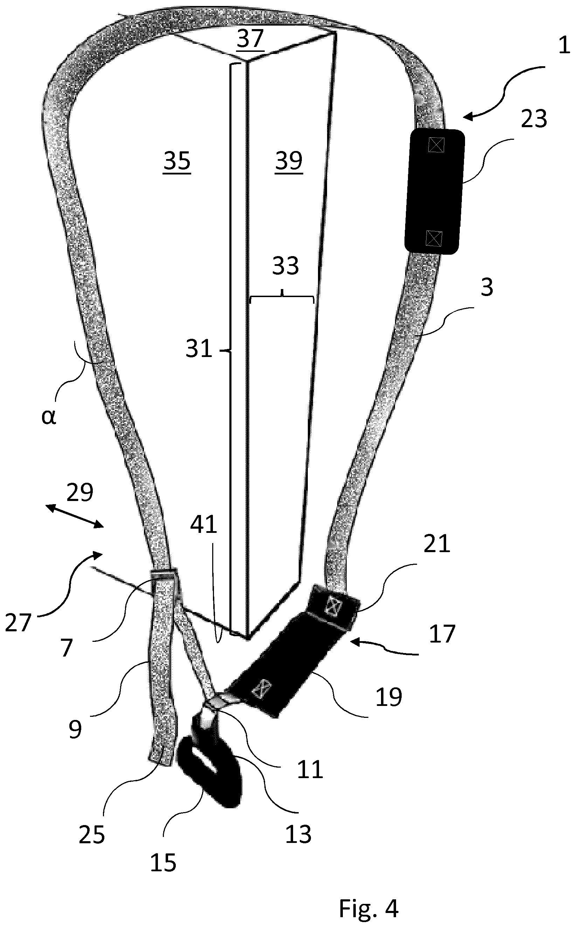

Fig. 4 indicates the use of the handling strap 1. Thus, Fig. 4 shows an end of a cardboard box 27, e.g. containing a roof window. The cardboard box 27 has a length in a longitudinal direction 29, a width 31, and a thickness 33. Accordingly, the cardboard box 27 has a wide longitudinal face 35, a narrow longitudinal face 37, and an end face 39. In Fig. 4 the cardboard box 27 has been placed standing on a narrow longitudinal face opposing the narrow longitudinal face 37 and thus providing a bottom face 41 of the cardboard box 27. Hereby the wide longitudinal face 35 is vertical, as it is seen in Fig. 4.

The handling strap 1 is now passed over the end of the cardboard box 27, the first pad 17 is brought into abutment with the bottom face 41, the bend rigid part 21 engaging a corner of the cardboard box 27 where an edge of the bottom face 41 adjoins an edge of a second wide longitudinal face opposing the wide longitudinal face 35, the second pad 23 is slid along the circumferential strap 3 to a position for abutment against the narrow longitudinal face 37 and the circumferential strap 3 is tightened around the cardboard box 27 by pulling the free end 25. The buckle 7 locks the second end 23 of the circumferential strap 3 whereby the tension obtained by the tightening is maintained. The handle 13 is now positioned adjacent the vertical wide longitudinal face 35 and is thus attached to that vertical face to provide for lifting and carrying the cardboard box 27 by gripping the rigid gripping part 15 of the handle 13. Friction, i.a. between the first pad 17 and the bottom face 41, prevents the circumferential strap 3 and the handle 13 from sliding relative to the cardboard box 27 and the vertical wide longitudinal face 35. However, this friction is heavily supported by the bend rigid part 21 engaging the corner of the cardboard box 27 thus minimizing the need for tension of the circumferential strap.

It should be understood that a second handling strap 1 may be attached to the other end of the cardboard box 27, not shown in Fig. 4, for two persons to lift and carry each their end of the cardboard box 27.

When the cardboard box 27 has been carried to the intended destination the handling strap 1 may be removed by releasing the buckle 7 and loosen the circumferential strap 3. The thickened free end 25 will not allow the second end 23 to be removed completely from the buckle 7 and accordingly the handling strap 1 is ready for use with another cardboard box once it has been removed from the cardboard box 27.

In order to place the handle relative to the bottom face 41 at a position providing for comfortable handling for a person carrying the article the handle 13 and the first pad 17 should be placed in the vicinity of each other. Especially the distance between the rigid gripping part 15 of the handle 13 and the first pad 17, when the article is lifted, should not exceed 70 cm and preferably it should not exceed 50 cm and more preferably it should not exceed 40 cm.

The handling strap 1 thus described is adapted for use with articles, such as cardboard boxes, of different width and thickness, i.e. of different circumference. If, however, a handling strap is intended for use with articles of a definite circumference, i.e. articles with similar width and thickness, the second pad need not be slidable but might be fixed to the circumferential strap.

Further the free end need not be thickened. It is even foreseeable that it might be preferred to be able remove completely the second end of the circumferential strap from the buckle, to open the loop formed by the circumferential strap for attaching the handling strap to and removing it from an article.

While in the embodiment described above with reference to the drawings the handle if formed as a rigid unity forming a closed loop including the rigid gripping part 15, the handle might be constituted by the handle strap forming a closed loop and passing through a piece of rigid tube thus constituting the rigid handle part.

## Claims

1. A handling strap (1) for attaching a handle to a vertical face (35) of a heavy article such as a window or a packaging containing such window, comprising a circumferential strap (3) with a buckle (7) allowing an end (9) of the circumferential strap (3) to be threaded though the buckle (7) and to be releasably locked to the buckle (7) by the buckle (7) being locked on the circumferential strap (3), said buckle (7) thus allowing the circumferential strap (3) to be releasably tightened around the article, a handle (13) fixedly fastened to the circumferential strap (3), and a pad (17) fixedly fastened to the circumferential strap (3) in the vicinity of the handle (13), wherein the handle (13) comprises a rigid gripping part (15), said handle and said pad being fixedly fastened to the circumferential strap whereby the handle and the pad, respectively, are, possibly releasably, locked to the circumferential strap at least at a fixing point such that the handle and the pad, respectively, and the circumferential strap may not slide relative to each other and may not be removed from the fixing point, but may possibly move within a limited distance around the fixing point.

2. A handling strap according to claim 1, **characterized by** comprising only a single circumferential strap (3).

3. A handling strap according to claim 1 or 2, **characterized in that** the handle (13) is attached to the circumferential strap (3) through a handle strap (11).

4. A handling strap according to any one of claims 1 to 3, **characterized in that** the pad (17) has a rigid part (21), which is bent.

5. A handling strap according to claim 4, **characterized in that** the rigid part (21) of the pad (17) is bent at an angle (α) in the range 75° to 135°, preferably 80° to 115°, more preferably approximately 90°.

6. A handling strap according to any one of claims 1 to 5, **characterized in that** the bend is at an end of the pad (17) opposite the handle (13).

7. A handling strap according to any one of claims 1 to 6, **chara**c**ter**i**zed** in that the pad (17) comprises a flexible part (19).

8. A handling strap according to any one of claims 1 to 7, **charac-ter**i**zed** by a second pad (23) slidably attached to the circumferential strap (3).

9. A handling strap according to claim 8, **characterized in that** the second pad (23) is flexible.

10. A handling strap according to any one of claims 1 to 9, **characterized in that** the buckle (7) is attached to a first end (5) of the circumferential strap (3), that a second end (9) of the circumferential strap (3) is threaded through the buckle (7) for tightening the circumferential strap (3) around the article and that a free end (25) of the second end (23) is thickened to prevent removal of the second end (23) from the buckle (7).

## Patentansprüche

1. Handhabungsgurt (1) zum Anbringen eines Griffs an einer vertikalen Fläche (35) eines schweren Artikels wie eines Fensters oder einer Verpackung, die ein solches Fenster enthält, umfassend einen Umfangsgurt (3) mit einer Schnalle (7) und einem Ende (9) des Umfangsgurts (3), das durch die Schnalle (7) zu fädeln und freigebbar mit der Schnalle (7) zu verriegeln ist, indem die Schnalle (7) an dem Umfangsgurt (3) verriegelt wird, wodurch die Schnalle (7) somit gestattet, dass der Umfangsgurt (3) freigebbar um den Artikel herum festgezurrt wird, einen fest an dem Umfangsgurt (3) befestigten Griff (13) und einen fest an dem Umfangsgurt (3) in der Nähe des Griffs (13) befestigten Klotz (17), wobei der Griff (13) einen starren Greifteil (15) umfasst, wobei der Griff und der Klotz fest an dem Umfangsgurt befestigt sind, wodurch der Griff bzw. der Klotz möglicherweise freigebbar mindestens an einer Befestigungsstelle an dem Umfangsgurt verriegelt sind, so dass der Griff bzw. der Klotz und der Umfangsgurt nicht bezüglich einander verrutschen und nicht von der Befestigungsstelle entfernt werden können, jedoch sich möglicherweise über eine begrenzte Strecke um die Befestigungsstelle herum bewegen können.

2. Handhabungsgurt nach Anspruch 1, **dadurch gekennzeichnet, dass** er nur einen einzigen Umfangsgurt (3) umfasst.

3. Handhabungsgurt nach Anspruch 1 oder 2, **dadurch gekennzeichnet, dass** der Griff (13) durch einen Griffgurt (11) an dem Umfangsgurt (3) angebracht ist.

4. Handhabungsgurt nach einem der Ansprüche 1 bis 3, **dadurch gekennzeichnet, dass** der Klotz (17) einen starren Teil (21) hat, der gebogen ist.

5. Handhabungsgurt nach Anspruch 4, **dadurch gekennzeichnet, dass** der starre Teil (21) des Klotzes (17) in einem Winkel (α) im Bereich von 75° bis 135°, vorzugsweise von 80° bis 115°, bevorzugter von ungefähr 90°, gebogen ist.

6. Handhabungsgurt nach einem der Ansprüche 1 bis 5, **dadurch gekennzeichnet, dass** die Biegung an einem Ende des Klotzes (17) gegenüber dem Griff (13) ist.

7. Handhabungsgurt nach einem der Ansprüche 1 bis 6, **dadurch gekennzeichnet, dass** der Klotz (17) einen flexiblen Teil (19) umfasst.

8. Handhabungsgurt nach einem der Ansprüche 1 bis 7, **gekennzeichnet durch** einen zweiten Klotz (23), der verschiebbar an dem Umfangsgurt (3) angebracht ist.

9. Handhabungsgurt nach Anspruch 8, **dadurch gekennzeichnet, dass** der zweite Klotz (23) flexibel ist.

10. Handhabungsgurt nach einem der Ansprüche 1 bis 9, **dadurch gekennzeichnet, dass** die Schnalle (7) an einem ersten Ende (5) des Umfangsgurts (3) angebracht ist, dass ein zweites Ende (9) des Umfangsgurts (3) durch die Schnalle (7) gefädelt ist, um den Umfangsgurt (3) um den Artikel herum festzuzurren, und dass ein freies Ende (25) des zweiten Endes (23) verdickt ist, um ein Entfernen des zweiten Endes (23) aus der Schnalle (7) zu verhindern.

## Revendications

1. Sangle de manipulation (1) permettant de fixer un manche sur une face verticale (35) d'un objet lourd tel qu'une fenêtre ou un emballage contenant cette fenêtre, comprenant une sangle circonférentielle (3) ayant une boucle (7) permettant à une extrémité (9) de la sangle circonférentielle (3) d'être enfilée à travers la boucle (7) et d'être bloquée de façon amovible sur la boucle (7) par le blocage de la boucle (7) sur la sangle circonférentielle (3), ladite boucle (7) permettant ainsi que la sangle circonférentielle (3) soit serrée de façon amovible autour de l'objet, un manche (13) fixé à demeure à la sangle circonférentielle (3), et un patin (17) fixé à demeure à la sangle circonférentielle (3) au voisinage du manche (13), dans laquelle le manche (13) comprend une partie de préhension rigide (15), ledit manche et ledit patin étant fixés à demeure à la sangle circonférentielle, moyennant quoi le manche et le patin sont respectivement bloqués, possiblement de façon amovible, sur la sangle circonférentielle au moins en un point de fixation tel que le manche et le patin, respectivement, et la sangle circonférentielle ne puissent pas coulisser les uns par rapport aux autres et ne puissent pas être retirés du point de fixation, mais puissent éventuellement se déplacer suivant une distance limitée autour du point de fixation.

2. Sangle de manipulation selon la revendication 1, **caractérisée en ce qu'**elle comprend une seule sangle circonférentielle (3).

3. Sangle de manipulation selon la revendication 1 ou 2, **caractérisée en ce que** le manche (13) est fixé à la sangle circonférentielle (3) par l'intermédiaire d'une sangle de manche (11).

4. Sangle de manipulation selon l'une quelconque des revendications 1 à 3, **caractérisée en ce que** le patin (17) a une partie rigide (21) qui est fléchie.

5. Sangle de manipulation selon la revendication 4, caractérisée en ce la partie rigide (21) du patin (17) est fléchie à un angle (α) compris entre 75° et 135°, de préférence entre 80° et 115°, plus préférablement d'environ 90°.

6. Sangle de manipulation selon l'une quelconque des revendications 1 à 5, **caractérisée en ce que** la flexion est à une extrémité du patin (17) opposée au manche (13).

7. Sangle de manipulation selon l'une quelconque des revendications 1 à 6, **caractérisée en ce que** le patin (17) comprend une partie flexible (19).

8. Sangle de manipulation selon l'une quelconque des revendications 1 à 7, **caractérisée par** un second patin (23) fixé coulissant à la sangle circonférentielle (3).

9. Sangle de manipulation selon la revendication 8, **caractérisée en ce que** le second patin (23) est flexible.

10. Sangle de manipulation selon l'une quelconque des revendications 1 à 9, **caractérisée en ce que** la boucle (7) est fixée à une première extrémité (5) de la sangle circonférentielle (3), une seconde extrémité (9) de la sangle circonférentielle (3) est enfilée à travers la boucle (7) pour serrer la sangle circonférentielle (3) autour de l'objet et une extrémité libre (25) de la seconde extrémité (23) est épaissie pour empêcher le retrait de la seconde extrémité (23) de la boucle (7).
